# EUROPÄISCHE PATENTSCHRIFT

(11) **EP 2 559 083 B1**
(45) Veröffentlichungstag und Bekanntmachung des Hinweises auf die Patenterteilung: **08.04.2015**
(21) Anmeldenummer: 11703693.9
(22) Anmeldetag: 16.02.2011
(51) Int. Cl.: H01M 2/20, H01M 10/0525, B60L 15/00, H01M 2/10, B60L 11/18

(54) **BATTERIE MIT EINER MEHRZAHL VON UNABHÄNGIGEN BATTERIEZELLSTRÄNGEN**
BATTERY COMPRISING A PLURALITY OF INDEPENDENT BATTERY CELL LINES
BATTERIE COMPORTANT UNE PLURALITÉ DE CHAÎNES D'ÉLÉMENTS DE BATTERIE INDÉPENDANTS

(30) Priorität: 16.04.2010 DE 102010027851
(43) Veröffentlichungstag der Anmeldung: 20.02.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/052255
(87) Internationale Veröffentlichungsnummer: WO 2011/128132

(56) Entgegenhaltungen:
- EP-A1- 0 577 980
- EP-A1- 2 040 363
- WO-A1-2008/035873
- US-A1- 2010 127 565

## Beschreibung

Die vorliegende Erfindung betrifft eine Batterie mit einer Mehrzahl von unabhängigen Batteriezellsträngen und ein elektrisches Kraftfahrzeug mit einer solchen Batterie.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbaren Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen. Dabei ist jedoch problematisch, dass es aufgrund nicht exakt identischer Zellkapazitäten und -spannungen zu Ausgleichsströmen zwischen den parallgeschalteten Batteriezellen kommen kann.

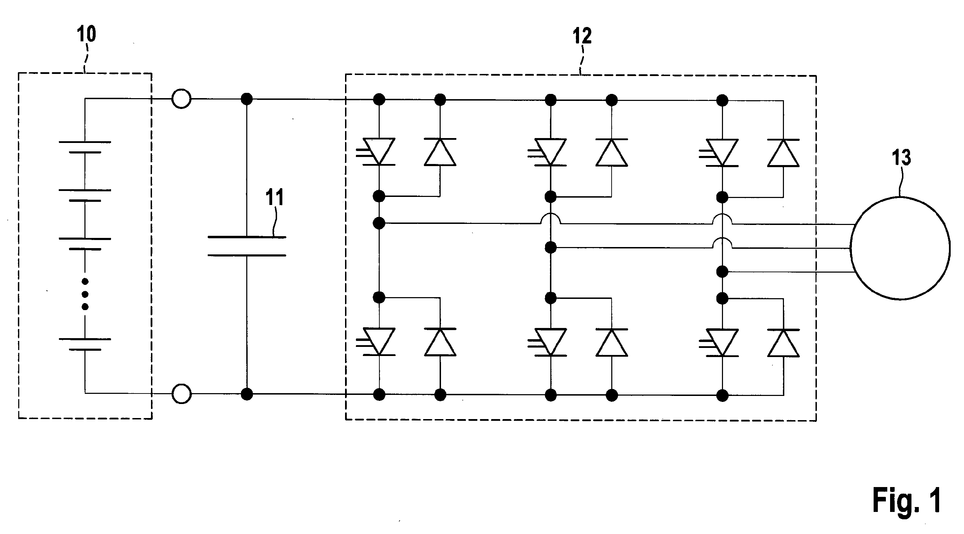

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Fig. 1 dargestellt. Eine Batterie 10 ist an einen Gleichspannungszwischenkreis angeschlossen, welcher durch einen Kondensator 11 gepuffert wird. An den Gleichspannungszwischenkreis angeschlossen ist ein Pulswechselrichter 12, der über jeweils zwei schaltbare Halbleiterventile und zwei Dioden an drei Ausgängen gegeneinander phasenversetzte Sinusspannungen für den Betrieb eines elektrischen Antriebsmotors 13 bereitstellt. Die Kapazität des Kondensators 11 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

### Offenbarung der Erfindung

Erfindungsgemäß wird daher ein elektrisches Antriebssystem gemäß Anspruch 1 eingeführt.

Die Batterie der Erfindung besitzt den Vorteil, dass die Gesamtkapazität der Batterie auf voneinander unabhängige Batteriezellstränge verteilt wird, wodurch es nicht mehr zu Ausgleichsströmen zwischen den Batteriezellen und Batteriezellsträngen kommt. Wird eine solche Batterie an einen Pulswechselrichter angeschlossen, der eine entsprechende Anzahl von Paaren von Eingängen hat, wie die Batterie Batteriezellstränge hat, kann die erforderliche Kapazität des jeweils an den Paaren von Eingängen des Pulswechselrichters anzuschließenden Pufferkondensatoren reduziert werden. Für bestimmte Anwendungen und Dimensionierungen können die Pufferkondensatoren unter Umständen vollständig entfallen.

Bevorzugt umfasst die Batteriegenau drei Batteriezellstränge. Eine solche Batterie ist besonders geeignet für den Antrieb von Elektromotoren, welche üblicherweise drei phasenverschobene Sinusspannungen für den Betrieb voraussetzen.

Jeder erste Pol der Mehrzahl von Batteriezellsträngen kann mit einem jeweiligen ersten Batterieterminal leitend verbunden sein. Die jeweiligen ersten Batterieterminals erlauben den Anschluss der Batterie an einen Pulswechselrichter mit entsprechend vielen Paaren von Eingängen.

Bei einer Ausführungsform der Erfindung können die zweiten Pole der Batteriezellstränge miteinander leitend verbunden sein. Die miteinander verbundenen zweiten Pole stellen so ein Bezugspotential dar, welches beispielsweise mit der Fahrzeugmasse verbunden werden kann, wofür die zweiten Pole der Batteriezellstränge mit einem zweiten Batterieterminal leitend verbunden sein können. Alternativ kann jeder zweite Pol der Mehrzahl von Batteriezellsträngen mit einem jeweiligen zweiten Batterieterminal leitend verbunden sein.

Die ersten Pole der Mehrzahl der Batteriezellstränge können positive Batteriepole und die zweiten Pole der Mehrzahl der Batteriezellstränge negative Batteriepole sein.

Bevorzugt sind die Batteriezellen Lithium-Ionen-Batteriezellen. Lithium-Ionen-Batteriezellen besitzen den Vorteil einer hohen Zellspannung und einer besonders hohen Kapazität pro Volumen.

Die Batterie kann ein Batteriegehäuse aufweisen, in dem die Mehrzahl von Batteriezellsträngen angeordnet ist.

Ein zweiter Erfindungsaspekt betrifft ein Kraftfahrzeug mit einem elektrischen Antriebsmotor zum Antreiben des Kraftfahrzeuges und einer mit dem elektrischen Antriebsmotor verbundenen elektrisches Antriebssystem gemäß der Erfindung.

### Zeichnungen

Ausführungsbeispiele der Erfindung werden anhand der Zeichnungen und der nachfolgenden Beschreibung näher erläutert. Es zeigen:
Figur 1 ein elektrisches Antriebssystem gemäß dem Stand der Technik,
Figur 2 ein erstes Ausführungsbeispiel der Erfindung,
Figur 3 ein zweites Ausführungsbeispiel der Erfindung, und
Figur 4 ein elektrisches Antriebssystem mit einer erfindungsgemäßen Batterie.

### Ausführungsformen der Erfindung

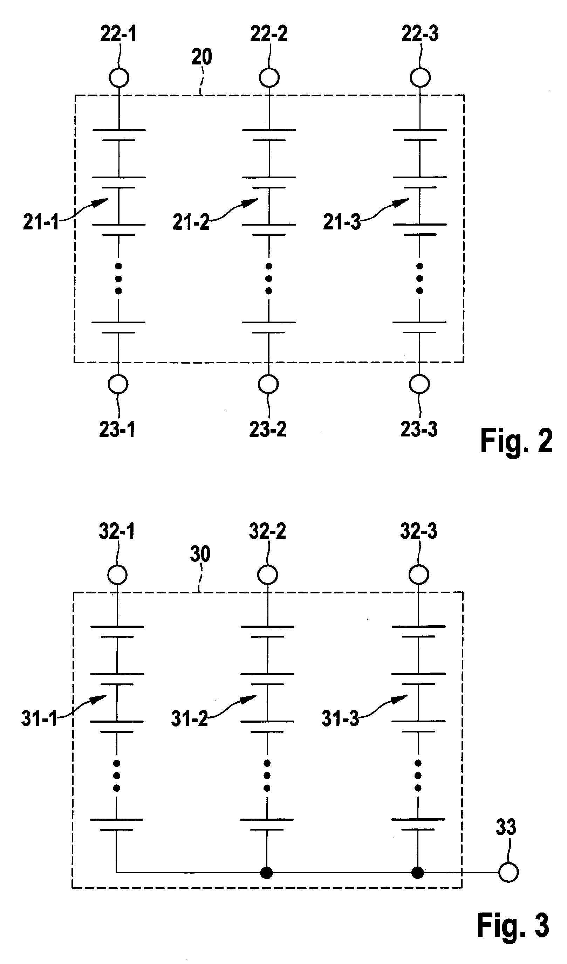

Figur 2 zeigt eine Batterie 20. Die Batterie weist drei Batteriezellstränge 21-1, 21-2 und 21-3 auf, welche jeweils dieselbe Anzahl von in Serie geschalteten Batteriezellen aufweisen. Da kein Batteriezellstrang 21-1, 21-2, 21-3 eine Parallelschaltung von Batteriezellen aufweist, kann es trotz einer hohen Gesamtkapazität der Batterie 20, die dem Dreifachen einer einzelnen Serienschaltung von Batteriezellen entspricht, nicht zu Ausgleichsströmen zwischen parallelgeschalteten Batteriezellen kommen. Jeder der Batteriezellstränge 21-1, 21-2, 21-3 der Batterie 20 weist jeweils ein positives Batterieterminal 22-1, 22-2 beziehungsweise 22-3 und jeweils ein negatives Batterieterminal 23-1, 23-2 beziehungsweise 23-3 auf.

Figur 3 zeigt eine Batterie 30. Die Batterie 30 entspricht im Wesentlichen der Batterie 20 und weist wie diese drei Batteriezellstränge 31-1, 31-2 und 31-3 auf. Jeder der Batteriezellstränge besitzt ein jeweiliges positives Batterieterminal 32-1, 32-3 beziehungsweise 32-3. Die negativen Pole der Batteriezellstränge 31-1, 31-2 und 31-3 sind beim zweiten Ausführungsbeispiel der Erfindung miteinander leitend verbunden, weshalb auch nur ein negatives Batterieterminal 33 vorgesehen ist.

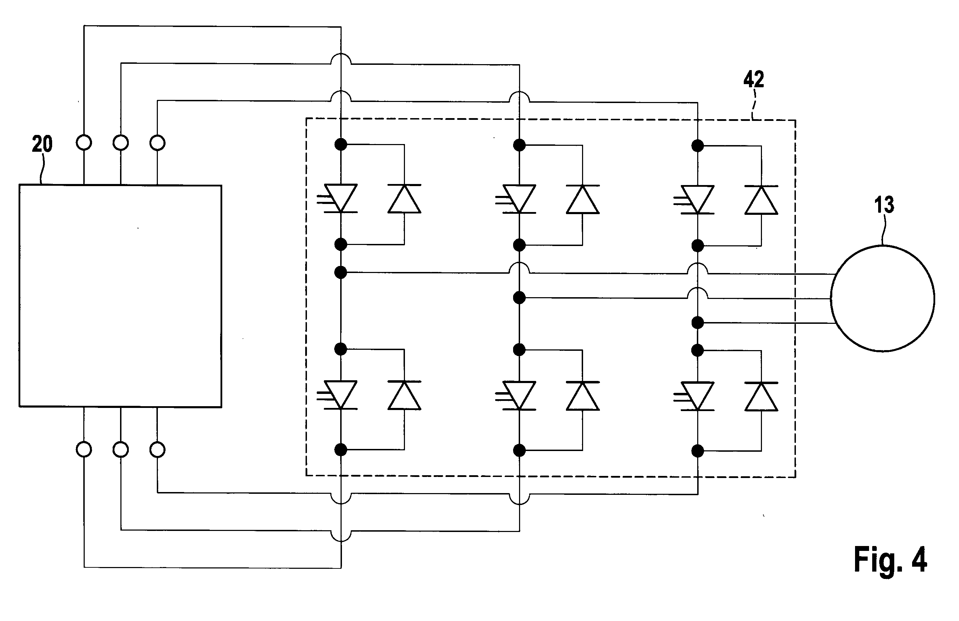

Figur 4 zeigt ein elektrisches Antriebssystem gemäß der Erfindung mit einer Batterie 20. Ein Pulswechselrichter 42 ist direkt, d.h. ohne Anschluss eines oder mehrere Kondensatoren an seinen Eingängen, mit den drei Paaren von Batterieterminals der Batterie 20 verbunden. Der Pulswechselrichter 42 besitzt für jeden Schaltpfad mit jeweils zwei Halbleiterventilen und zwei Dioden ein eigenes Paar von Eingängen, welche mit jeweils einem der drei Paare von Batterieterminals der Batterie 20 verbunden sind. Dadurch entfällt der Gleichspannungszwischenkreis beziehungsweise es werden drei individuelle Gleichspannungszwischenkreise vorgesehen. Aufgrund der geringeren Leistung, die jeweils von den einzelnen Schaltpfaden des Pulswechselrichters 42 der Batterie und damit dem Gleichspannungszwischenkreis entnommen wird, kann die Pufferung der Gleichspannungszwischenkreise durch verhältnismäßig kleine Kondensatoren vorgenommen werden oder - wie im Beispiel der Fig. 4 - entfallen. Die drei Schaltpfade des Pulswechselrichters 42 sind ausgangsseitig mit den drei Phasenanschlüssen des elektrischen Antriebsmotors 13 verbunden.

## Patentansprüche

1. Eine elektrisches Antriebssystem, aufweisend eine Batterie (20, 30) mit einer Mehrzahl von Batteriezellsträngen (21, 31), von denen jeder eine Mehrzahl von zwischen einen jeweiligen ersten Pol und einen jeweiligen zweiten Pol seriengeschalteten Batteriezellen enthält, und einem Pulswechselrichter (42), der eine Mehrzahl von Schaltpfaden mit jeweils zwei Halbleiterventilen und zwei Dioden aufweist, wobei jeder der Schaltpfade des Pulswechselrichter (42) von genau einem der Batteriezellstränge (21, 31) versorgt wird.

2. Das Antriebssystem gemäß Anspruch 1, mit genau drei Batteriezellsträngen (21, 31).

3. Das Antriebssystem gemäß einem der Ansprüche 1 oder 2, bei der jeder erste Pol der Mehrzahl-von-Batteriezellstränge (21, 31) mit einem jeweiligen ersten Batterieterminal (22, 32) leitend verbunden ist.

4. Das Antriebssystem gemäß einem der Ansprüche 1 bis 3, bei der jeder zweite Pol der Mehrzahl-von Batteriezellstränge (21) mit einem jeweiligen zweiten Batterieterminal (22) leitend verbunden ist.

5. Das Antriebssystem gemäß einem der vorhergehenden Ansprüche, bei der die ersten Pole der Mehrzahl der Batteriezellstränge (21, 31) positive Batteriepole und bei der die zweiten Pole der Mehrzahl der Batteriezellstränge (21, 31) negative Batteriepole sind.

6. Das Antriebssystem gemäß einem der vorhergehenden Ansprüche, bei der die Batteriezellen Lithium-Ionen-Batteriezellen sind.

7. Das Antriebssystem gemäß einem der vorhergehenden Ansprüche, mit einem Batteriegehäuse, in dem die Mehrzahl von Batteriezellsträngen (21, 31) angeordnet ist.

8. Ein Kraftfahrzeug mit einem elektrischen Antriebsmotor (13) zum Antreiben des Kraftfahrzeuges und einem Antriebssystem gemäß einem der vorhergehenden Ansprüche, wobei die Schaltpfade des Pulswechselrichters (42) des Antriebssystems ausgangsseitig mit den Phasenanschlüssen des elektrischen Antriebsmotors (13) verbunden sind.

## Claims

1. Electric drive system having a battery (20, 30) having a plurality of battery cell lines (21, 31), each of which contains a plurality of battery cells which are connected in series between a respective first pole and a respective second pole, and a pulse-controlled inverter (42) which has a plurality of switching paths, each having two semiconductor valves and two diodes each, wherein each of the switching paths of the pulse-controlled inverter (42) is supplied by precisely one of the battery cell lines (21,31) .

2. Drive system according to Claim 1, having precisely three battery cell lines (21, 31).

3. Drive system according to one of claims 1 and 2, in which each first pole of the plurality of battery cell lines (21, 31) is conductively connected to a respective first battery terminal (22, 32).

4. Drive system according to one of Claims 1 to 3, in which every second pole of the plurality of battery cell lines (21) is conductively connected to a respective second battery terminal (22).

5. Drive ystem according to one of the preceding claims, in which the first poles of the plurality of battery cell lines (21, 31) are positive battery poles, and in which the second poles of the plurality of battery cell lines (21, 31) are negative battery poles.

6. Drive system according to one of the preceding claims, in which the battery cells are lithium-ion battery cells.

7. Drive system according to one of the preceding claims, having a battery housing in which the plurality of battery cell lines (21, 31) is arranged.

8. Motor vehicle having an electric drive motor (13) for driving the motor vehicle and a drive system according to one of the preceding claims, wherein the switching paths of the pulse-controlled inverter (42) of the drive system are connected on the output side to the phase connections of the electric drive motor (13).

## Revendications

1. Système d'entraînement électrique, présentant une batterie (20, 30) avec une pluralité de chaînes de cellules de batterie (21, 31), dont chacune contient une pluralité de cellules de batterie montées en série entre un premier pôle respectif et un deuxième pôle respectif, et un onduleur à impulsions (42) qui présente une pluralité de chemins de commutation ayant chacun deux soupapes à semi-conducteurs et deux diodes, chacun des chemins de commutation de l'onduleur à impulsions (42) étant alimenté par exactement l'une des chaînes de cellules de batterie (21, 31).

2. Système d'entraînement selon la revendication 1, comprenant exactement trois chaînes de cellules de batterie (21, 31).

3. Système d'entraînement selon l'une quelconque des revendications 1 ou 2, dans lequel chaque premier pôle de la pluralité de chaînes de cellules de batterie (21, 31) est connecté de manière conductrice à une première borne de batterie respective (22, 32).

4. Système d'entraînement selon l'une quelconque des revendications 1 à 3, dans lequel chaque deuxième pôle de la pluralité de chaînes de cellules de batterie (21) est connecté de manière conductrice à une deuxième borne de batterie respective (22).

5. Système d'entraînement selon l'une quelconque des revendications précédentes, dans lequel les premiers pôles de la pluralité des chaînes de cellules de batterie (21, 31) sont des pôles de batterie positifs et dans lequel les deuxièmes pôles de la pluralité des chaînes de cellules de batterie (21, 31) sont des pôles de batterie négatifs.

6. Système d'entraînement selon l'une quelconque des revendications précédentes, dans lequel les cellules de batterie sont des cellules de batterie lithium-ion.

7. Système d'entraînement selon l'une quelconque des revendications précédentes, comprenant un boîtier de batterie dans lequel est disposée la pluralité de chaînes de cellules de batterie (21, 31).

8. Véhicule automobile comprenant un moteur d'entraînement électrique (13) pour entraîner le véhicule automobile et un système d'entraînement selon l'une quelconque des revendications précédentes, les chemins de commutation de l'onduleur à impulsions (42) du système d'entraînement étant connectés du côté de la sortie aux raccords de phase du moteur d'entraînement électrique (13).
